# FASCICULE DE BREVET EUROPEEN

(11) **EP 1 882 158 B1**
(45) Date de publication et mention de la délivrance du brevet: **06.07.2011**
(21) Numéro de dépôt: 06764648.9
(22) Date de dépôt: 19.05.2006
(51) Int. Cl.: G01D 5/16, G01D 5/245

(54) **PROCEDE DE DISCRIMINATION D'UNE IMPULSION DE REFERENCE**
REFERENZIMPULSUNTERSCHEIDUNGSVERFAHREN
REFERENCE PULSE DISCRIMINATION METHOD

(30) Priorité: 19.05.2005 FR 0505035
(43) Date de publication de la demande: 30.01.2008
(73) Titulaire: S.N.R. ROULEMENTS, 74000 Annecy (FR)
(72) Inventeur: DESBIOLLES, Pascal, F-74570 Thorens-Glières (FR)
(74) Mandataire: Novagraaf Technologies
(86) Numéro de dépôt international: PCT/FR2006/001151
(87) Numéro de publication internationale: WO 2006/123067

(56) Documents cités:
- EP-A- 0 871 014
- FR-A- 2 769 088

## Description

L'invention concerne un procédé de formation d'une impulsion de référence à partir de trois signaux, SIN, COS et REF, qui sont temporellement pseudos sinusoïdaux et de même période nominale, les signaux SIN et COS étant en quadrature, le signal REF étant déphasé d'un angle φ par rapport au signal SIN, et le signal REF présentant une période singulière. L'invention concerne également un dispositif de détermination d'un état de référence d'un organe tournant par rapport à une structure fixe, qui comprend un dispositif de traitement apte à mettre en oeuvre un tel procédé.

Dans des exemples d'utilisation, le dispositif permet la détermination de la position angulaire absolue de l'organe tournant par rapport à la structure fixe telle que décrit notamment dans le document FR-2 856 147, ou le pilotage d'un moteur à commutation électronique tel que décrit dans les documents FR-2 845 212 ou FR-2 845 213.

En effet, la formation d'une impulsion de référence permet, en indexant celle-ci à une position angulaire de référence de l'organe tournant, de détecter ladite position de référence.

On connaît des documents FR-2 769 088 et EP-0 871 014 des procédés de formation d'une impulsion de référence à partir des signaux SIN, COS et REF définis précédemment.

Dans la pratique, une limitation de ces procédés peut apparaître en cas de variations d'amplitude des signaux, par exemple sous l'effet des écarts de température d'utilisation ou des dispersions de positionnement des éléments sensibles destinés à délivrer lesdits signaux.

L'invention vise notamment à surmonter cette limitation en améliorant la robustesse du procédé de formation d'une impulsion de référence vis-à-vis des éventuelles variations d'amplitude des signaux, ainsi que le perfectionnement des dispositifs de détermination connus.

A cet effet, selon un premier aspect, l'invention propose un procédé de formation d'une impulsion de référence Iᵣ à partir de trois signaux, SIN, COS et REF, qui sont temporellement pseudos sinusoïdaux et de même période nominale P₀, les signaux SIN et COS étant en quadrature, le signal REF étant déphasé d'un angle φ par rapport au signal SIN, et le signal REF présentant une période singulière Pₛ, ledit procédé prévoyant les étapes suivantes :
- comparaison du signal REF avec une valeur seuil constituée par la valeur moyenne du signal REF, de sorte à former un signal numérique S1 comprenant des fenêtres F de largeur fonction de la période du signal REF;
- comparaison des signaux SIN et COS, de sorte à former un signal numérique S2 comprenant, pour chaque période, une impulsion I de largeur contrôlée à une valeur inférieure à celle correspondant au déphasage φ, lesdites impulsions étant positionnées de sorte à être incluses dans la fenêtre Fₛ correspondant à la période singulière et à être exclues des autres fenêtres ;
- combinaison des signaux numériques S1, S2 précédemment formés de sorte à discriminer l'impulsion de référence Iᵣ correspondant à la période singulière Pₛ.

Selon un deuxième aspect, l'invention propose un dispositif de détermination d'un état de référence d'un organe tournant par rapport à une structure fixe, ledit dispositif comprenant :
- un codeur destiné à être solidarisé à l'organe tournant, ledit codeur étant agencé pour délivrer trois signaux, SIN, COS et REF, qui sont temporellement pseudos sinusoïdaux et de même période nominale, les signaux SIN et COS étant en quadrature, le signal REF étant déphasé d'un angle φ par rapport au signal SIN, et le signal REF présentant au moins une période singulière correspondant à un état de référence ;
- un capteur fixé à distance de lecture du codeur, ledit capteur étant agencé pour délivrer les signaux SIN, COS et REF ;
- un dispositif de traitement des signaux SIN, COS et REF qui est apte à former une impulsion de référence selon le procédé présenté ci-dessus, de sorte à déterminer l'état par détection de l'impulsion de référence correspondante.

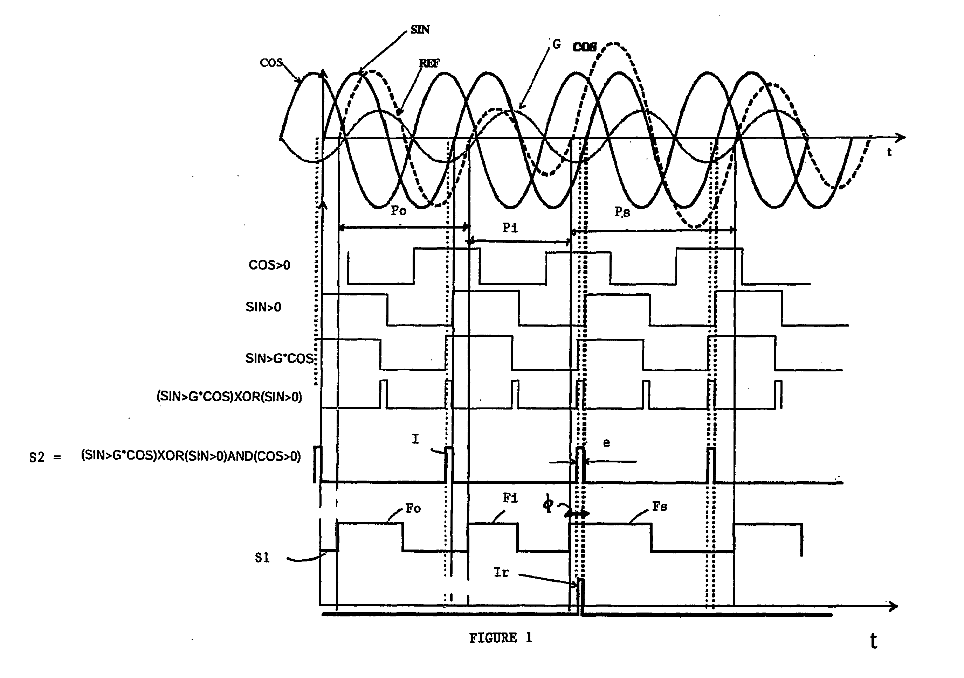

D'autres objets et avantages de l'invention apparaîtront au cours de la description qui suit, faite en référence au dessin annexé représentant les signaux utilisés pour la mise en oeuvre du procédé selon un mode de réalisation.

L'invention concerne un dispositif de détermination d'un état de référence d'un organe tournant par rapport à une structure fixe. Dans un exemple d'application, l'état de référence est une position angulaire absolue de l'organe tournant par rapport à la structure fixe, par exemple d'une colonne de direction d'un véhicule automobile par rapport au châssis dudit véhicule.

Toutefois, l'invention n'est nullement limitée à une telle application particulière, et peut être utilisée dans toutes autres applications dans lesquelles une position angulaire de référence d'un organe tournant doit être déterminée, notamment pour piloter un moteur à commutation électronique.

Le dispositif de détermination comprend un codeur destiné à être solidarisé en rotation à l'organe tournant. Selon le mode de réalisation décrit, le codeur est formé d'un anneau magnétique comprenant une piste multipolaire principale et une piste multipolaire de référence qui sont concentriques, lesdites pistes comprenant une succession de pôles Nord et Sud de largeur polaire constante.

En outre, la piste de référence comprend une transition magnétique qui est différente des autres, de sorte par exemple à former une singularité magnétique formée par une paire de pôle de largeur différente des autres. Une telle réalisation de codeur est par exemple décrite dans les documents FR-2 769 088 et EP-0 871 014. Selon une réalisation, la piste de référence peut comprendre plusieurs singularités magnétiques qui sont réparties le long de ladite piste.

Un tel codeur permet de délivrer trois signaux (appelés par la suite SIN, COS, REF) par l'intermédiaire de la piste principale pour les signaux SIN, COS et par l'intermédiaire de la piste de référence pour le signal REF.

Comme représenté sur la figure, les signaux SIN, COS et REF sont temporellement pseudos sinusoïdaux et de même période nominale P₀. Par pseudo sinusoïdal, on entend que le signal peut être approximé par une sinusoïde.

Par ailleurs, les signaux SIN et COS sont en quadrature et le signal REF est déphasé d'un angle φ par rapport au signal SIN. En outre, du fait de la présence de la singularité magnétique, le signal REF présente une période singulière Pₛ. Plus précisément, dans le mode de réalisation décrit, la singularité induit la présence d'une période Pᵢ de valeur inférieure à P₀ et de la période Pₛ qui présente une valeur supérieure à celle de P₀.

Pour déterminer l'état de référence, la période singulière Pₛ est agencée pour correspondre audit état de référence. Pour ce faire, la singularité peut être indexée à une position angulaire de référence dans le cas d'un dispositif de détermination de la position angulaire absolue de l'organe tournant. Dans cette application, l'exploitation des signaux SIN et/ou COS permet de connaître de façon incrémentale la position angulaire relative de l'organe tournant, et la détection de l'impulsion de référence permet de recaler cette position par rapport à la position absolue.

Le dispositif de détermination comprend en outre un capteur fixé à distance de lecture du codeur, ledit capteur étant agencé pour délivrer les signaux SIN, COS et REF.

A cet effet, dans le mode de réalisation décrit, le capteur comprend au moins deux éléments sensibles disposés à distance d'entrefer de la piste principale pour délivrer les signaux SIN et COS. Dans un exemple de réalisation, le capteur comprend une pluralité d'éléments sensibles alignés telle que décrit dans le document FR-2 792 403. En outre, le capteur comprend au moins un élément sensible disposé à distance d'entrefer de la piste de référence pour délivrer le signal REF.

Le dispositif de détermination comprend également un dispositif de traitement des signaux SIN, COS et REF qui est apte à former une impulsion de référence Iᵣ selon le procédé décrit ci-dessous de sorte, par détection de l'impulsion de référence, à déterminer l'état de référence correspondant.

Le procédé de formation d'une impulsion de référence Iᵣ à partir des trois signaux SIN, COS et REF comprend une étape de comparaison du signal REF avec une valeur seuil de sorte à former un signal numérique S1 comprenant des fenêtres F de largeur fonction de la demi période du signal REF.

Dans le mode de réalisation représenté, le signal REF est comparé à la valeur moyenne dudit signal qui est égale à zéro.

Le procédé de formation comprend également une étape de comparaison des signaux SIN et COS, de sorte à former un signal numérique S2 comprenant, pour chaque période, une impulsion I de largeur contrôlée à une valeur e qui est inférieure à celle correspondant au déphasage φ. Les impulsions 1 sont positionnées de sorte à être incluses dans la fenêtre Fₛ correspondant à la période singulière Pₛ et à être exclues des fenêtres F₀ correspondant à la période nominale P₀, ainsi que de la fenêtre Fᵢ de largeur inférieure qui correspondant à la période Pᵢ.

Dans le mode de réalisation représenté, l'amplitude du signal COS est ajustée par un gain G de sorte à contrôler la largeur des impulsions et le positionnement de celle-ci. En outre, la comparaison est réalisée par l'opération : S2 = (SIN>GCOS)XOR(SIN>0)AND(COS>0), XOR étant la fonction OU exclusif et AND étant la fonction ET.

Enfin, le procédé prévoit de combiner les signaux S1 et S2 de sorte à discriminer l'impulsion de référence Iᵣ correspondant à la période singulière, ladite comparaison étant réalisée par la fonction ET. Cette discrimination est rendue possible par le fait que la largeur e des impulsions est contrôlée à une valeur inférieure à celle correspondant au déphasage φ, ce qui permet de positionner l'ensemble des impulsions I par rapport aux fenêtres conformément à l'invention.

En outre, on peut prévoir de contrôler la largeur des impulsions de sorte à tenir compte de l'influence des variations d'entrefer entre les éléments sensibles et les pistes multipolaires, ainsi que des variations de température. En effet, de telles variations peuvent engendrer des modulations de phase des signaux numériques de sorte qu'un ajustement de la largeur des impulsions deviennent nécessaire pour maintenir, dans toutes les conditions de fonctionnement, la position desdites impulsions par rapport aux fenêtres.

Dans le cas où le codeur comprend plusieurs singularités magnétiques, c'est-à-dire que le signal REF comprend plusieurs périodes singulières Pₛ, le procédé prévoit de discriminer les impulsions de référence Iᵣ correspondant à chacune desdites périodes singulières.

Par mise en oeuvre du procédé selon l'invention, les variations d'amplitude des signaux SIN, COS et/ou REF n'affectent pas la discrimination de l'impulsion de référence puisque :
- ces variations ne modifient quasiment pas le signal S1 ; et
- la formation du signal S2 selon l'invention est indépendante desdites amplitudes.

Par conséquent, le procédé selon l'invention permet d'obtenir une grande robustesse par rapport aux variations de température d'utilisation et/ou aux dispersions de positionnement des éléments sensibles à distance d'entrefer des pistes multipolaires.

## Revendications

1. Procédé de formation d'une impulsion de référence Iᵣ à partir de trois signaux, SIN, COS et REF, qui sont temporellement pseudos sinusoïdaux et de même période nominale P₀, les signaux SIN et COS étant en quadrature, le signal REF étant déphasé d'un angle φ par rapport au signal SIN, et le signal REF présentant une période singulière Pₛ, ledit procédé prévoyant les étapes suivantes :
- comparaison du signal REF avec une valeur seuil constituée par la valeur moyenne du signal REF, de sorte à former un signal numérique S1 comprenant des fenêtres F de largeur fonction de la demi période du signal REF ;
- comparaison des signaux SIN et COS, de sorte à former un signal numérique S2 comprenant, pour chaque période, une impulsion I de largeur contrôlée à une valeur inférieure à celle correspondant au déphasage φ, lesdites impulsions étant positionnées de sorte à être incluses dans la fenêtre Fₛ correspondant à la période singulière et à être exclues des autres fenêtres ;
- combinaison des signaux numériques S1, S2 précédemment formés de sorte à discriminer l'impulsion de référence Iᵣ correspondant à la période singulière Pₛ.

2. Procédé selon la revendication 1, dans lequel l'amplitude du signal COS est ajustée par un gain G de sorte à contrôler la largeur des impulsions I et le positionnement de celles-ci par rapport aux fenêtres.

3. Procédé selon la revendication 1 ou 2, dans lequel l'étape de comparaison des signaux SIN et COS est réalisée par l'opération : (SIN>COS)XOR(SIN>0)AND(COS>0), XOR étant la fonction OU exclusif et AND étant la fonction ET.

4. Procédé selon l'une quelconque des revendications 1 à 3, dans lequel la valeur seuil est égale à zéro.

5. Procédé selon l'une quelconque des revendications 1 à 4, dans lequel la combinaison est réalisée par la fonction ET.

6. Procédé selon l'une quelconque des revendications 1 à 5, dans lequel le signal REF comprend plusieurs périodes singulières, ledit procédé prévoyant de discriminer les impulsions de référence correspondant à chacune des périodes singulières.

7. Dispositif de détermination d'un état de référence d'un organe tournant par rapport à une structure fixe, ledit dispositif comprenant :
- un codeur destiné à être solidarisé à l'organe tournant, ledit codeur étant agencé pour délivrer trois signaux, SIN, COS et REF, qui sont temporellement pseudos sinusoïdaux et de même période nominale, les signaux SIN et COS étant en quadrature, le signal REF étant déphasé d'un angle φ par rapport au signal SIN, et le signal REF présentant au moins une période singulière correspondant à un état de référence ;
- un capteur fixé à distance de lecture du codeur, ledit capteur étant agencé pour délivrer les signaux SIN, COS et REF ;
- un dispositif de traitement des signaux SIN, COS et REF qui est apte à former une impulsion de référence selon l'une quelconque des revendications 1 à 6, de sorte à déterminer l'état par détection de l'impulsion de référence correspondante.

8. Dispositif selon la revendication 7, **caractérisé en ce que** le codeur est formé d'un anneau magnétique comprenant une piste multipolaire principale et une piste multipolaire de référence qui sont concentriques, lesdites pistes comprenant une succession de pôles Nord et Sud de largeur polaire constante, la période singulière étant réalisée par une transition magnétique qui est différente des autres.

9. Dispositif selon la revendication 8, **caractérisé en ce que** le capteur comprend au moins deux éléments sensibles disposés à distance d'entrefer de la piste principale pour délivrer les signaux SIN et COS, et au moins un élément sensible disposé à distance d'entrefer de la piste de référence pour délivrer le signal REF.

## Claims

1. Method of forming a reference pulse Ir from three signals, SIN, COS and REF, which are temporally pseudo sinusoidal and have the same nominal period P0, the signals SIN and COS being in quadrature, the signal REF being out of phase by an angle Φ with respect to the signal SIN, and the signal REF having a singular period Ps, said method providing the following steps:
comparing the signal REF with a threshold value formed by the mean value of the signal REF, so as to form a numerical signal S1 comprising windows F with a width that is a function of the half period of the signal REF;
comparing the signals SIN and COS, so as to form a numerical signal S2 comprising, for each period, a pulse I with a width controlled at a value less than that corresponding to the phase difference Φ, said pulses being positioned so as to be included in the window Fs corresponding to the singular period and to be excluded from the other windows;
combining the numerical signals S1, S2 previously formed so as to distinguish the reference pulse Ir corresponding to the singular period Ps.

2. Method according to claim 1, in which the amplitude of the signal COS is adjusted by a gain G so as to control the width of the pulses I and the positioning thereof with respect to the windows.

3. Method according to claim 1 or 2, in which the step of comparing the signals SIN and COS is performed by the operation: (SIN>COS)XOR(SIN>0)AND(COS>0), XOR being the exclusive OR function and AND being the AND function.

4. Method according to any one of claims 1 to 3, in which the threshold value is equal to zero.

5. Method according to any one of claims 1 to 4, in which the combination is performed by the AND function.

6. Method according to any one of claims 1 to 5, in which the signal REF comprises several singular periods, said method making provision for distinguishing the reference pulses corresponding to each of the singular periods.

7. Device for determining a reference state of a member rotating with respect to a fixed structure, said device comprising:
a coder intended to be secured to the rotating member, said coder being arranged to deliver three signals, SIN, COS and REF, which are temporally pseudo-sinusoidal and have the same nominal period, the signals SIN and COS being in quadrature, the signal REF being out of phase by an angle Φ with respect to the signal SIN, and the signal REF having at least one singular period corresponding to a reference state;
a sensor fixed at a reading distance from the coder, said sensor being arranged to deliver the signals SIN, COS and REF;
a device for processing the signals SIN, COS and REF that is able to form a reference pulse according to any one of claims 1 to 6, so as to determine the state by detection of the corresponding reference pulse.

8. Device according to claim 7, **characterised in that** the coder is formed by a magnetic ring comprising a main multi-pole track and a reference multi-pole track that are concentric, said tracks comprising a succession of North and South poles of constant polar width, the singular period being produced by a magnetic transition that is different from the others.

9. Device according to claim 8, **characterised in that** the sensor comprises at least two sensitive elements disposed at an air-gap distance from the main track in order to deliver the signals SIN and COS, and at least one sensitive element disposed at an air-gap distance from the reference track in order to deliver the signal REF.

## Patentansprüche

1. Verfahren zur Bildung eines Referenzimpulses Ir aus drei Signalen, SIN, COS und REF, die zeitlich pseudosinusförmig sind und die gleiche nominale Periode P0 aufweisen, wobei die Signale SIN und COS in Quadratur vorliegen, wobei das Signal REF um einen Winkel φ bezüglich des Signals SIN verschoben ist und das Signal REF eine spezifische Periode Ps aufweist, wobei das Verfahren die folgenden Schritte vorsieht:
- Vergleichen des Signals REF mit einem Schwellenwert, dargestellt durch einen mittleren Wert des Signals REF, um ein numerisches Signal S1 zu bilden, umfassend Fenster F mit einer Breite in Funktion der Halbperiode des Signals REF;
- Vergleichen der Signale SIN und COS, um ein numerisches Signal S2 zu bilden, umfassend für jede Periode einen Impuls I mit einer Breite, die auf einen Wert eingestellt ist, der niedriger als derjenige ist, der der Verschiebung φ entspricht, wobei die Impulse so angeordnet sind, dass sie im Fenster Fs eingeschlossen sind, das der spezifischen Periode entspricht, und von den anderen Fenstern ausgeschlossen sind;
- Kombinieren der numerischen Signale S1, S2, die zuvor gebildet wurden, um den Referenzimpuls Ir zu unterscheiden, der der spezifischen Periode Ps entspricht.

2. Verfahren nach Anspruch 1, wobei die Amplitude des Signals COS von einem Verstärkungsfaktor G eingestellt wird, um die Breite der Impulse I und die Positionierung dieser bezüglich der Fenster zu kontrollieren.

3. Verfahren nach Anspruch 1 oder 2, wobei der Schritt des Vergleichens der Signale SIN und COS durch die folgende Operation durchgeführt wird: (SIN>COS)XOR(SIN>0)AND(COS>0), wobei XOR ausschließlich die Funktion ODER und AND die Funktion UND ist.

4. Verfahren nach einem der Ansprüche 1 bis 3, wobei der Schwellenwert gleich null ist.

5. Verfahren nach einem der Ansprüche 1 bis 4, wobei die Kombination durch die Funktion UND erfolgt.

6. Verfahren nach einem der Ansprüche 1 bis 5, wobei das Signal REF mehrere spezifische Perioden umfasst, wobei das Verfahren vorsieht, die Referenzimpulse zu unterscheiden, die jeder der spezifischen Perioden entsprechen.

7. Vorrichtung zur Bestimmung eines Referenzzustandes eines drehenden Organs bezüglich einer festen Struktur, wobei die Einrichtung Folgendes umfasst:
- einen Codierer, der dazu vorgesehen ist, mit dem drehenden Organ fest verbunden zu werden, wobei der Codierer angebracht ist, um drei Signale abzugeben, SIN, COS und REF, die zeitlich pseudosinusförmig sind und die gleiche nominale Periode aufweisen, wobei die Signale SIN und COS in Quadratur vorliegen, wobei das Signal REF um einen Winkel φ bezüglich des Signals SIN verschoben ist und das Signal REF mindestens eine spezifische Periode aufweist, die einem Referenzzustand entspricht.
- einen Sensor, der in einem Leseabstand vom Codierer befestigt ist, wobei der Sensor angebracht ist, um die Signale SIN, COS und REF auszugeben;
- eine Vorrichtung zur Verarbeitung der Signale SIN, COS und REF, die dazu geeignet ist, einen Referenzimpuls nach einem der Ansprüche 1 bis 6 zu bilden, um den Zustand durch den Nachweis des entsprechenden Referenzimpulses zu bestimmen.

8. Vorrichtung nach Anspruch 7, **dadurch gekennzeichnet, dass** der Codierer aus einem magnetischen Ring gebildet ist, umfassend eine multipolare Hauptspur und eine multipolare Referenzspur, die konzentrisch sind, wobei die Spuren eine Abfolge von Nord- und Südpolen mit einer konstanten Polbreite umfassen, wobei die spezifische Periode durch eine magnetische Übertragung, die verschieden von den anderen ist, durchgeführt wird.

9. Vorrichtung nach Anspruch 8, **dadurch gekennzeichnet, dass** der Sensor mindestens zwei empfindliche Elemente umfasst, die in einer Luftspaltdistanz von der Hauptspur angeordnet sind, um die Signale SIN und COS abzugeben, und mindestens ein empfindliches Element, das in einer Luftspaltdistanz von der Referenzspur angebracht ist, um das Signal REF abzugeben.
